# FASCICULE DE BREVET EUROPEEN

(11) **EP 4 426 528 B1**
(45) Date de publication et mention de la délivrance du brevet: **24.09.2025**
(21) Numéro de dépôt: 22805916.8
(22) Date de dépôt: 24.10.2022
(51) Int. Cl.: B29B 11/16, B29C 53/56, B29D 99/00, F01D 5/28, B64C 11/26, B64F 5/10

(54) **FABRICATION D'UNE PREFORME D'UNE PARTIE D'AUBE OU D'HELICE PAR ENROULEMENT D'UNE TEXTURE OBTENUE PAR TISSAGE EN FORME**
VERFAHREN ZUR HERSTELLUNG EINER VORFORM FÜR EINEN TEIL EINER KLINGE ODER EINES PROPELLERS DURCH WICKELN EINES DURCH WEBEN ERHALTENEN GEWEBES ZU EINER FORM
METHOD FOR PRODUCING A PREFORM FOR PART OF A BLADE OR PROPELLER BY WINDING A WEAVE OBTAINED BY WEAVING TO SHAPE

(30) Priorité: 04.11.2021 FR 2111718
(43) Date de publication de la demande: 11.09.2024
(73) Titulaire: SAFRAN AIRCRAFT ENGINES, 75015 Paris (FR); SAFRAN, 75015 Paris (FR)
(72) Inventeur: CHARLEUX, François, 77550 Moissy-Cramayel (FR); COUPE, Dominique, Marie, Christian, 77550 Moissy-Cramayel (FR)
(74) Mandataire: Cabinet Beau de Loménie
(86) Numéro de dépôt international: PCT/FR2022/052014
(87) Numéro de publication internationale: WO 2023/079225

(56) Documents cités:
- US-A1- 2011 038 732

## Description

### Domaine Technique

La présente invention concerne la fabrication d'une préforme d'une partie d'aube ou d'hélice présentant une épaisseur évolutive dans laquelle un tissage en forme est utilisé pour former la texture fibreuse qui va être enroulée sur un substrat présentant la forme à obtenir. L'invention vise également des procédés de fabrication de pièces en matériau composite associés.

### Technique antérieure

Des parties d'hélice de turbopropulseur ayant un pied de fixation présentant une surépaisseur, dit « pied bulbe » ou « pied tulipe », prolongé par un longeron sur lequel un profil aérodynamique est destiné à être emmanché peuvent être obtenues en superposant des couches de tresses fibreuses autour d'un mandrin en mousse. Avec cette méthode, on peut constater des déviations par rapport à ce qui est attendu pour les orientations des fibres notamment dans les zones de variation de diamètre de la pièce ce qui peut affecter les performances mécaniques. Il peut, en outre, être recherché d'augmenter la quantité de fibres selon l'axe longitudinal de l'hélice à obtenir. La tresseuse ne pouvant stocker qu'une quantité limitée de fibres axiales, il peut être recouru à un drapage manuel de couches fibreuses unidirectionnelles supplémentaires durant le tressage, ce qui rallonge et complexifie le procédé. A cela peuvent s'ajouter des opérations de pré-compaction intermédiaires pour limiter le foisonnement de la préforme ainsi construite, avant sa mise en moule pour l'injection de résine par technique de moulage par transfert de résine. On connait US 2011/0038732 qui divulgue une aube de turbomachine en matériau composite.

Il est, par conséquent, souhaitable de disposer de procédés de fabrication de parties d'hélices, et également d'aubes, de turbopropulseur qui permettent de s'affranchir des inconvénients associés à la technique de tressage sur un mandrin.

### Exposé de l'invention

L'invention propose un procédé de fabrication d'une préforme fibreuse d'une partie d'aube ou d'hélice de turbomachine comprenant au moins un pied de fixation prolongé par une portion de montage d'un profil aérodynamique, le procédé comprenant au moins :
- l'enroulement d'une texture fibreuse, obtenue par tissage en forme, sur un substrat de section évolutive présentant au moins une première région de surépaisseur à la forme du pied de fixation et une deuxième région à la forme de la portion de montage du profil aérodynamique.

L'invention propose de réaliser par technique de tissage en forme (technique désignée par « contour weaving » en anglais) la texture qui est destinée à être enroulée pour former la préforme de la partie de l'aube ou de l'hélice. Le tissage en forme est une technique connue en soi pour l'obtention d'autres types de pièces et met en œuvre un mandrin d'appel en sortie du métier à tisser qui présente une forme non cylindrique de sorte à appeler la texture avec une longueur locale de fils circonférentiels au mandrin d'appel (correspondant aux fils de chaîne) adaptée pour permettre à la texture d'épouser lors de l'enroulement la forme du substrat sans déformation de celle-ci.

L'invention permet ainsi de s'affranchir des inconvénients associés à la technique de tressage pour réaliser une partie de pièce de forme complexe et obtenir les orientations fibreuses souhaitées même dans les zones de variation d'épaisseur. L'invention permet également une cadence de production élevée et présente un coût de mise en œuvre maîtrisé en ne nécessitant pas d'usinage complexe mais seulement un éventuel détourage après formation de la matrice.

Dans un exemple de réalisation, la texture fibreuse est co-enroulée sur le substrat avec une nappe multiaxiale présentant des fibres orientées différemment des fibres de la texture fibreuse. Dans ce cas, la nappe multiaxiale peut être présente sur tout ou partie de l'enroulement de la texture fibreuse comme il sera rappelé plus bas.

Une telle caractéristique permet avantageusement d'améliorer la tenue en cisaillement de la pièce obtenue.

En particulier, la nappe multiaxiale peut comprendre au moins une première couche fibreuse unidirectionnelle orientée à +45° par rapport à un axe longitudinal du substrat, superposée à au moins une deuxième couche fibreuse unidirectionnelle orientée à -45° par rapport à l'axe longitudinal du substrat.

Dans un exemple de réalisation, le pied de fixation de la préforme fibreuse est axisymétrique.

Dans un exemple de réalisation, la texture est obtenue par tissage en forme en utilisant un mandrin d'appel en sortie de métier à tisser distinct du substrat et ayant au moins une première zone d'appel de fils ayant un premier rayon et une deuxième zone d'appel de fils ayant un deuxième rayon, le premier rayon étant supérieur au deuxième rayon, les fils appelés sur la première zone étant enroulés sur la première région du substrat et ceux appelés sur la deuxième zone étant enroulés sur la deuxième région du substrat.

Une telle caractéristique permet avantageusement de favoriser la proportion de fils de chaîne en sens circonférentiel sur le pied de fixation, ce qui améliore la tenue de la pièce aux sollicitations rencontrées en fonctionnement. On ne sort toutefois pas du cadre de l'invention si, en variante, la proportion de fils de trame est favorisée. De façon générale, le rapport chaîne / trame est déterminé selon les zones de la pièce en fonction des sollicitations.

Dans un exemple de réalisation, le tissage en forme de la texture et son enroulement sur le substrat sont réalisés en continu.

Une telle caractéristique permet avantageusement d'augmenter davantage encore la cadence de production.

Dans un exemple de réalisation, le substrat est obtenu par tissage tridimensionnel. Dans ce cas, le substrat forme une partie structurale qui est destinée à rester dans l'hélice ou l'aube montée dans la turbomachine afin d'améliorer ses performances mécaniques.

L'invention vise également un procédé de fabrication d'une partie d'aube ou d'hélice de turbomachine en matériau composite, comprenant au moins :
- la fabrication d'une préforme fibreuse de la partie d'aube ou d'hélice de turbomachine par mise en œuvre d'un procédé tel que décrit plus haut, et
- la formation d'une matrice dans une porosité de la préforme fibreuse ainsi obtenue.

L'invention vise également un procédé de fabrication d'une aube ou d'une hélice de turbomachine en matériau composite, comprenant au moins :
- la formation d'une préforme fibreuse de la partie d'aube ou d'hélice de turbomachine telle que décrite plus haut,
- le positionnement d'une préforme fibreuse d'un profil aérodynamique sur la portion de montage, et
- la co-densification de la préforme fibreuse de la partie d'aube ou d'hélice de turbomachine et de la préforme fibreuse du profil aérodynamique positionnée sur cette préforme afin d'obtenir l'aube ou l'hélice de turbomachine.

Dans un exemple de réalisation, on obtient une aube de soufflante, par exemple une aube de soufflante à calage variable, mais l'invention n'est pas limitée à cet exemple comme il sera décrit plus bas.

### Brève description des dessins

[Fig. 1] La figure 1 représente, de manière schématique et en perspective, un exemple de préforme de partie d'aube ou d'hélice de turbomachine pouvant être obtenue par mise en œuvre de l'invention.
[Fig. 2] La figure 2 représente, de manière schématique, une coupe longitudinale de la préforme de la figure 1 avec emmanchement d'une préforme de profil aérodynamique.
[Fig. 3] La figure 3 représente, de manière schématique, la formation de la texture fibreuse par tissage en forme en vue de former la préforme de la figure 1.
[Fig. 4] La figure 4 représente une coupe longitudinale du mandrin d'appel utilisé en figure 3.
[Fig. 5] La figure 5 représente, de manière schématique, le co-enroulement de la texture fibreuse formée par tissage en forme selon la figure 3 avec une nappe multiaxiale.
[Fig. 6] La figure 6 représente un détail de la nappe multiaxiale.

### Description des modes de réalisation

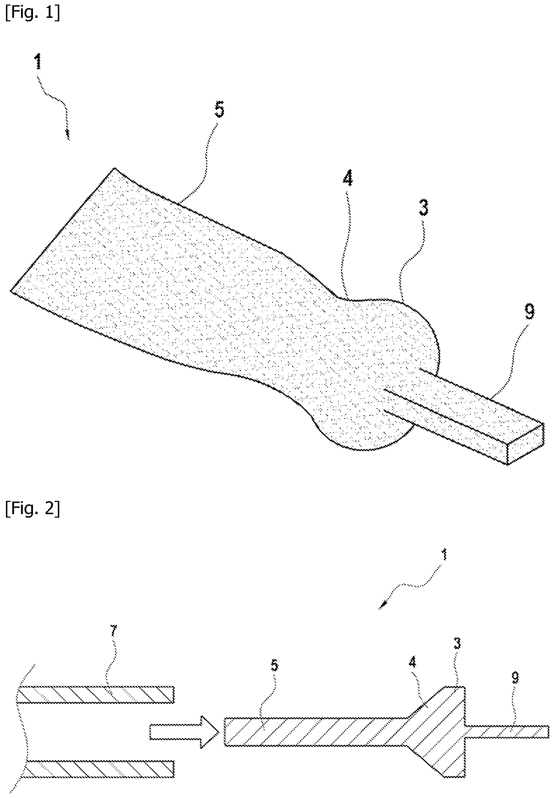

La figure 1 illustre un exemple de préforme fibreuse 1 selon l'invention qui est destinée à former le renfort fibreux d'une partie d'une aube de soufflante à calage variable en matériau composite. Une telle pièce est réglable en position autour de son axe pour optimiser l'écoulement du flux d'air dans la soufflante. La suite de la description s'attache à décrire l'application de l'invention à ce type de pièce mais l'homme du métier reconnaîtra que l'invention est également applicable à d'autres types de pièce, comme des aubes rotatives carénées en général ou des hélices. Les aubes ou les hélices peuvent être à calage variable ou non. L'aube ou l'hélice peut être une pièce de turbomachine aéronautique ou non, l'invention peut ainsi s'appliquer à la fabrication d'hélices d'éolienne.

La préforme fibreuse 1 comprend un pied de fixation 3 définissant une surépaisseur, aussi appelé « pied bulbe » ou « pied tulipe », par lequel transitent l'essentiel des efforts en fonctionnement qui se prolonge une portion de montage 5 d'un profil aérodynamique qui est ici sur la forme d'une portion aplatie formant un longeron. Une fois densifié, le pied de fixation 3 est destiné à être monté sur un rotor de turbomachine par engagement dans un logement aménagé à la périphérie du rotor de forme correspondante. Une préforme de profil aérodynamique 7 (partie de pale) est destinée à être emmanchée sur la portion de montage 5 (voir figure 2) en vue d'obtenir la pièce complète en intercalant si cela est souhaité un élément tiers comme une mousse (non représenté). Une portion de transition 4 est présente entre le pied de fixation 3 et la portion de montage 5. La portion de transition 4 présente une épaisseur qui décroît en direction de la portion de montage 5. La préforme fibreuse 1 comprend également un élément de pivotement 9 définissant une extrémité de la préforme 1 et situé du côté opposé à la portion de montage 5 qui est apte à permettre le pivotement de l'aube par rapport à son axe en fonctionnement afin d'optimiser son orientation.

La préforme 1 est obtenue par enroulement d'une texture fibreuse sur un substrat de forme non développable lequel a la forme de la préforme à obtenir, avec notamment une section évolutive entre une première région de surépaisseur qui est destinée à définir le pied de fixation 3 et une deuxième région qui est destinée à définir la portion de montage 5. Selon l'invention, la texture fibreuse est obtenue par technique de tissage en forme de sorte que la texture épouse lors de l'enroulement la forme du substrat sans déformation de celle-ci.

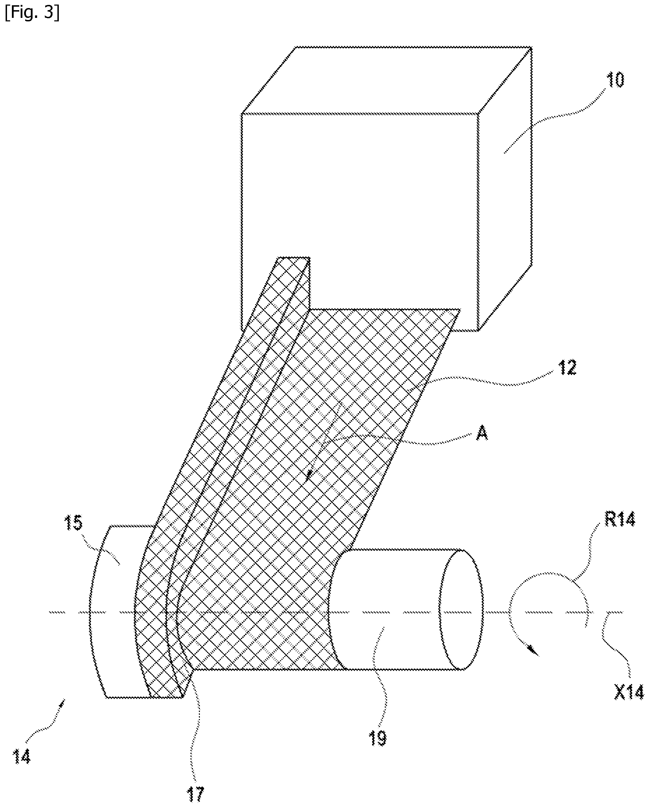

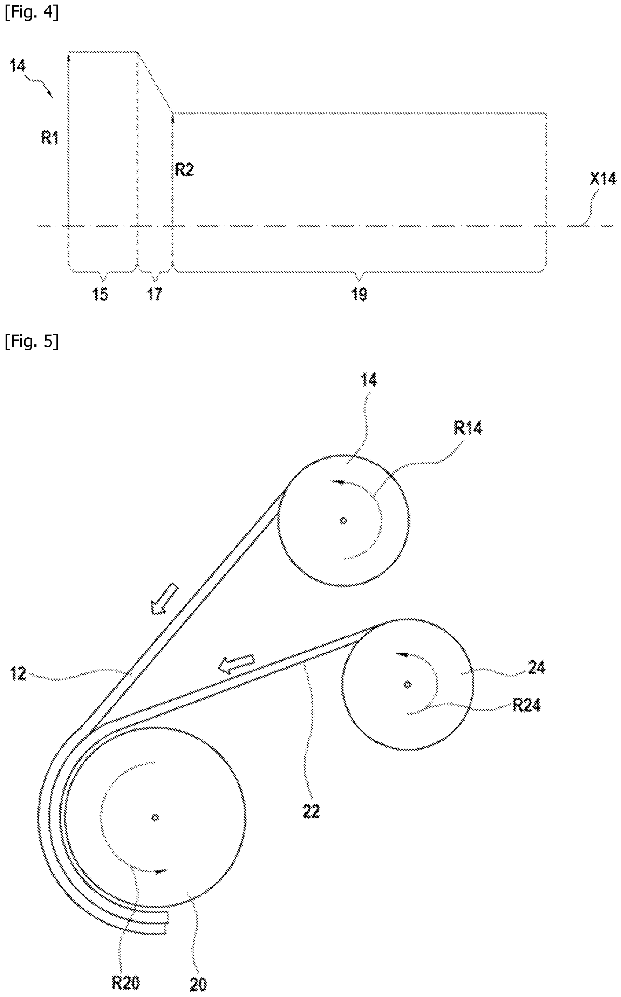

Le tissage en forme de la texture est décrit en lien avec les figures 3 et 4. Selon cette technique, on utilise, pour appeler les fils de chaîne, un mandrin d'appel 14 positionné directement en sortie du métier à tisser 10 qui a une géométrie non cylindrique. Le mandrin d'appel 14 est rotatif (flèche de rotation R14 autour de l'axe du mandrin X14) et appelle par sa rotation les fils de chaîne selon la direction d'appel A. Les fils de chaîne sont tissés dans le métier à tisser 10 avec des fils de trame pour obtenir la texture fibreuse 12. La texture fibreuse 12 produite par le métier à tisser 10 se conforme sur le mandrin d'appel 14 qui a une forme particulière permettant ensuite l'enroulement sur le substrat sans déformation de la texture 12. Le mandrin d'appel 14 présente le long de son axe X14 une première portion cylindrique 15 définissant une première zone d'appel de fils, une deuxième portion conique 17 de transition et une troisième portion cylindrique 19 qui définit une deuxième zone d'appel de fils. Les fils appelés sur la première zone 15 vont être enroulés sur la première région du substrat destinée à former le pied de fixation 3 et les fils appelés sur la deuxième zone 19 vont être enroulés sur la deuxième région du substrat destinée à former la portion de montage 5. La géométrie du mandrin d'appel 14 permet de ne pas consommer les fils de chaîne de façon uniforme le long de son axe X14. En effet, la longueur de fils de chaîne appelée par le mandrin 14 est fonction du rayon local de ce mandrin. Plus le rayon local du mandrin 14 est élevé, plus la longueur de fils de chaîne appelée lors d'une rotation du mandrin sera importante. Comme illustré à la figure 4, les première 15 et deuxième 19 zones d'appel ont des rayons différents respectivement R1 et R2. De manière caractéristique de la technique de tissage en forme, le rapport des rayons R1/R2 est sensiblement égal au rapport des périmètres P1/P2 sur le substrat, où P1 désigne le périmètre de la première région du substrat et P2 désigne le périmètre de la deuxième région du substrat. Cela permet de garantir que la longueur des fils de chaîne appelée localement par le mandrin 14 corresponde au périmètre de la région du substrat sur laquelle ces fils vont être enroulés afin de ne pas déformer la texture 12 lors de l'enroulement. Dans l'exemple illustré, le rayon R1 est supérieur au rayon R2 mais on ne sort pas du cadre de l'invention si une configuration inverse était mise en œuvre selon la géométrie souhaitée pour la pièce finale. La première région du substrat peut avantageusement être symétrique autour de l'axe du substrat afin de former un pied de fixation 3 axisymétrique. D'autres variantes sont possibles où la première région du substrat n'est pas axisymétrique ayant par exemple une forme de polygone à coins arrondis. L'invention concerne bien entendu également d'autres géométries avec davantage de zones de rayons différents. La deuxième portion 17 conique présente un profil permettant de réaliser la portion de transition 4 entre le pied de fixation 3 et la portion de montage 5. On notera que la texture fibreuse 12 peut être obtenue par tissage tridimensionnel ou en variante par tissage bidimensionnel. La texture fibreuse 12 peut être formée de fils de carbone, de verre, ou polymériques ou d'un mélange de telles fibres. On notera que l'on peut également modifier localement la nature des fils, la taille de fils et l'armure de tissage afin d'optimiser les propriétés mécaniques de la pièce. Dans la préforme obtenue 1, les fils de chaîne sont orientés de manière circonférentielle et les fils de trame de manière axiale.

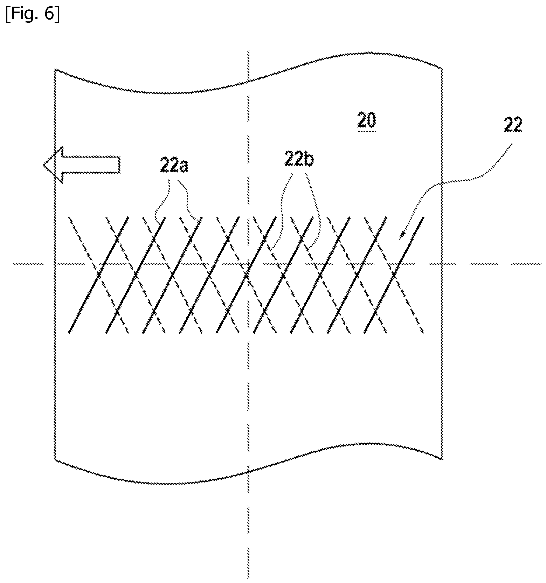

La figure 5 illustre un co-enroulement de la texture fibreuse 12 obtenue par tissage en forme sur le substrat 20. Dans l'exemple de la figure 5, la texture fibreuse 12 est acheminée depuis le mandrin d'appel 14 sur le substrat 20, distinct du mandrin d'appel, de manière continue. Le substrat 20 est animé d'un mouvement de rotation (flèche R20) autour de son axe afin d'appeler la texture fibreuse 12 depuis le mandrin d'appel 14. La rotation du substrat 20 permet également d'appeler une nappe multiaxiale 22 depuis un mandrin 24 rotatif (flèche R24) qui est distinct du mandrin d'appel 14 afin de co-enrouler la texture fibreuse 12 et la nappe multiaxiale 22 sur le substrat 20. Le nombre de couches de fils dans la texture 12 et le nombre de tours d'enroulement sont déterminés en fonction de l'épaisseur souhaitée pour la pièce qui est fonction des sollicitations auxquelles elle est soumise en fonctionnement. Une texture obtenue par tissage tridimensionnel permet d'augmenter l'épaisseur du composite tout en ayant peu de tours à réaliser pour obtenir la pièce souhaitée. L'emploi d'une texture obtenue par tissage bidimensionnel peut être privilégié pour des composites d'épaisseur réduite. Dans le cas du co-enroulement illustré à la figure 5, on obtiendra dans la préforme fibreuse une alternance de couches enroulées de texture fibreuse 12 et de nappe multiaxiale 22. Le co-enroulement peut être réalisé sur les première et seconde régions du substrat 20. La figure 6 illustre un détail de la nappe multiaxiale 22 qui peut être mise en œuvre où celle-ci comprend une première couche fibreuse unidirectionnelle comprenant les fibres 22a qui est superposée à une deuxième couche fibreuse unidirectionnelle comprenant les fibres 22b. Les fibres 22a et 22b ont chacune des orientations différentes et présentent des orientations différentes par rapport à l'orientation des fils de chaîne et de trame de la texture fibreuse 12. Les fibres 22a et 22b peuvent être orientées à +45° et -45° par rapport à l'axe longitudinal X20 du substrat 20. L'orientation des fibres 22a et 22b est fonction de l'application envisagée. On notera également que l'invention n'est pas limitée à un co-enroulement avec la nappe multiaxiale 22 et que seule la texture 12 peut être enroulée sur le substrat 20 afin d'obtenir la préforme fibreuse 1. On notera également que d'autres textiles qu'une nappe multiaxiale 22 peuvent être co-enroulés avec la texture 12, comme par exemple des tissus bidimensionnels, des tissus tridimensionnels ou des tresses. Aussi dans le cas où la texture 12 est co-enroulée avec un textile distinct, ledit textile peut être présent sur une partie seulement de l'enroulement de la texture fibreuse. L'emplacement du co-enroulement local est déterminé en fonction des sollicitations subies par la pièce. Cette situation peut résulter de l'utilisation d'un textile de largeur inférieure à la largeur de la texture fibreuse. Sauf mention contraire, la largeur est mesurée transversalement à une direction d'appel vers le substrat. En variante, le textile est présent sur tout l'enroulement de la texture fibreuse (co-enroulement sur toute la zone où la texture est enroulée). Les figures 5 et 6 qui viennent d'être décrites illustrent la réalisation en continu de la formation de la texture 12 par tissage en forme sur le mandrin d'appel 14 et de l'enroulement sur le substrat 20. Selon une variante non illustrée, la texture 12 peut être d'abord formée par tissage en forme puis stockée sur un mandrin de stockage en vue d'initier l'enroulement sur le substrat 20 ultérieurement, après achèvement du tissage en forme. Dans ce dernier cas, on réalise un enroulement pour transférer la texture en forme du mandrin de stockage vers le substrat (avec un co-enroulement éventuel comme décrit plus haut).

Le substrat 20 sur lequel la texture 12 est enroulée peut être de nature variée. Selon un exemple, le substrat est destiné à rester dans la pièce destinée à être montée dans la turbomachine. Dans ce cas, le substrat 20 peut être structural, en étant par exemple formé par tissage tridimensionnel. On peut, selon une variante, utiliser un substrat 20 présentant une densité inférieure à la densité de la pièce en matériau composite à obtenir, par exemple en matériau alvéolaire comme une mousse. Selon une variante, le substrat 20 n'est pas destiné à rester dans la pièce destinée à être montée dans la turbomachine. On peut ainsi utiliser un substrat qui est destiné à être démonté ou éliminé après l'enroulement et éventuellement après la densification de la préforme fibreuse 1. On peut ainsi obtenir une pièce ayant une partie creuse au niveau du pied et de la portion de montage du profil, ce qui permet d'alléger celle-ci si cela est souhaité.

Après enroulement sur le substrat 20, on obtient la préforme fibreuse 1 comprenant le pied de fixation 3 et la portion de montage 5 illustrée à la figure 1. Le procédé de fabrication de la pièce se poursuit par emmanchement de la préforme fibreuse 7 de profil aérodynamique sur la portion de montage 5 comme illustré à la figure 2 puis par une co-densification des préformes 1 et 7 ainsi assemblées. La technique de co-densification est une méthode connue en soi dans laquelle il y a formation d'une matrice commune dans la porosité de la préforme 1 et de la préforme 7 afin de solidariser celle-ci et obtenir l'aube ou l'hélice en matériau composite. La co-densification peut être réalisée par introduction d'une résine dans la porosité des préformes 1 et 7 et traitement thermique afin de réticuler cette résine. La résine peut être introduite par une technique d'injection ou d'infusion. La résine peut être une résine époxyde, polyamide ou polyester, à titre non limitatif. L'aube ou l'hélice fabriquée peut être en matériau composite à matrice organique. L'invention peut également s'appliquer à la formation de pièces en matériau composite à matrice céramique, par exemple par introduction d'un précurseur de céramique puis pyrolyse de ce dernier afin de former la matrice céramique. Après formation de la matrice, l'aube ou l'hélice peut être montée dans la turbomachine, éventuellement après une étape de retrait ou d'élimination du substrat 20 par exemple par dissolution ou traitement thermique si cela est souhaité.

## Revendications

1. Procédé de fabrication d'une préforme fibreuse (1) d'une partie d'aube ou d'hélice de turbomachine comprenant au moins un pied de fixation (3) prolongé par une portion de montage (5) d'un profil aérodynamique, le procédé comprenant au moins :
- l'enroulement d'une texture fibreuse (12), obtenue par tissage en forme, sur un substrat (20) de section évolutive présentant au moins une première région de surépaisseur à la forme du pied de fixation et une deuxième région à la forme de la portion de montage du profil aérodynamique.

2. Procédé selon la revendication 1, dans lequel la texture fibreuse (12) est co-enroulée sur le substrat (20) avec une nappe multiaxiale (22) présentant des fibres (22a ; 22b) orientées différemment des fibres de la texture fibreuse.

3. Procédé selon la revendication 2, dans lequel la nappe multiaxiale (22) comprend au moins une première couche fibreuse unidirectionnelle (22a) orientée à +45° par rapport à un axe longitudinal du substrat, superposée à au moins une deuxième couche fibreuse unidirectionnelle (22b) orientée à -45° par rapport à l'axe longitudinal (X20) du substrat (20).

4. Procédé selon l'une quelconque des revendications 1 à 3, dans lequel le pied de fixation (3) de la préforme fibreuse (1) est axisymétrique.

5. Procédé selon l'une quelconque des revendications 1 à 4, dans lequel la texture (12) est obtenue par tissage en forme en utilisant un mandrin d'appel (14) en sortie de métier à tisser distinct du substrat (20) et ayant au moins une première zone (15) d'appel de fils ayant un premier rayon (R1) et une deuxième zone (19) d'appel de fils ayant un deuxième rayon (R2), le premier rayon étant supérieur au deuxième rayon, les fils appelés sur la première zone étant enroulés sur la première région du substrat et ceux appelés sur la deuxième zone étant enroulés sur la deuxième région du substrat.

6. Procédé selon l'une quelconque des revendications 1 à 5, dans lequel le tissage en forme de la texture (12) et son enroulement sur le substrat (20) sont réalisés en continu.

7. Procédé selon l'une quelconque des revendications 1 à 6, dans lequel le substrat (20) est obtenu par tissage tridimensionnel.

8. Procédé de fabrication d'une partie d'aube ou d'hélice de turbomachine en matériau composite, comprenant au moins :
- la fabrication d'une préforme fibreuse (1) de la partie d'aube ou d'hélice de turbomachine par mise en œuvre d'un procédé selon l'une quelconque des revendications 1 à 7, et
- la formation d'une matrice dans une porosité de la préforme fibreuse ainsi obtenue.

9. Procédé de fabrication d'une aube ou d'une hélice de turbomachine en matériau composite, comprenant au moins :
- la formation d'une préforme fibreuse (1) de la partie d'aube ou d'hélice de turbomachine selon l'une quelconque des revendications 1 à 7,
- le positionnement d'une préforme fibreuse (7) d'un profil aérodynamique sur la portion de montage (5), et
- la co-densification de la préforme fibreuse de la partie d'aube ou d'hélice de turbomachine et de la préforme fibreuse du profil aérodynamique positionnée sur cette préforme afin d'obtenir l'aube ou l'hélice de turbomachine.

10. Procédé selon la revendication 9, dans lequel on obtient une aube de soufflante.

## Patentansprüche

1. Verfahren zur Herstellung einer faserigen Vorform (1) für ein Schaufel- oder Propellerteil einer Strömungsmaschine, umfassend mindestens einen Fixierungsfuß (3), der durch einen Montageabschnitt (5) mit aerodynamischem Profil verlängert ist, wobei das Verfahren mindestens umfasst:
- Aufwickeln einer faserigen Textur (12), die durch Formweben erhalten wird, auf ein Substrat (20) mit veränderlichem Querschnitt, das mindestens eine erste Region mit Verdickung in der Form des Fixierungsfußes und eine zweite Region in der Form des Montageabschnitts mit aerodynamischem Profil aufweist.

2. Verfahren nach Anspruch 1, wobei die faserige Textur (12) auf das Substrat (20) zusammen mit einem multiaxialen Vlies (22) aufgewickelt wird, das Fasern (22a; 22b) aufweist, die anders als Fasern der faserigen Textur ausgerichtet sind.

3. Verfahren nach Anspruch 2, wobei das multiaxiale Vlies (22) mindestens eine erste unidirektionale faserige Lage (22a) umfasst, die in +45° in Bezug auf eine Längsachse des Substrats ausgerichtet ist, mindestens eine zweite unidirektionale faserige Lage (22b) überlagernd, die in -45° in Bezug auf die Längsachse (X20) des Substrats (20) ausgerichtet ist.

4. Verfahren nach einem der Ansprüche 1 bis 3, wobei der Fixierungsfuß (3) der faserigen Vorform (1) achsensymmetrisch ist.

5. Verfahren nach einem der Ansprüche 1 bis 4, wobei die Textur (12) durch Formweben unter Verwendung einer Aufnahmespindel (14) am Ausgang einer Webmaschine erhalten wird, die von dem Substrat (20) getrennt ist und mindestens eine erste Zone (15) zur Aufnahme von Fäden mit einem ersten Radius (R1) und eine zweite Zone (19) zur Aufnahme von Fäden mit einem zweiten Radius (R2) aufweist, wobei der erste Radius größer als der zweite Radius ist, wobei die in der ersten Zone aufgenommenen Fäden in der ersten Region des Substrats aufgewickelt werden und die in der zweiten Zone aufgenommenen in der zweiten Region des Substrats aufgewickelt werden.

6. Verfahren nach einem der Ansprüche 1 bis 5, wobei das Formweben der Textur (12) und ihr Aufwickeln auf das Substrat (20) kontinuierlich implementiert werden.

7. Verfahren nach einem der Ansprüche 1 bis 6, wobei das Substrat (20) durch dreidimensionales Weben erhalten wird.

8. Verfahren zur Herstellung eines Schaufel- oder Propellerteils einer Strömungsmaschine aus einem Verbundstoff, umfassend mindestens:
- Herstellen einer faserigen Vorform (1) für das Schaufel- oder Propellerteil einer Strömungsmaschine durch Durchführen eines Verfahrens nach einem der Ansprüche 1 bis 7 und
- Bilden einer Matrix in einer Porosität der so erhaltenen faserigen Vorform.

9. Verfahren zur Herstellung einer Schaufel oder eines Propellers einer Strömungsmaschine aus einem Verbundstoff, umfassend mindestens:
- Bilden einer faserigen Vorform (1) für das Schaufel- oder Propellerteil einer Strömungsmaschine nach einem der Ansprüche 1 bis 7,
- Positionieren einer faserigen Vorform (7) mit einem aerodynamischen Profil auf dem Montageabschnitt (5) und
- gemeinsames Verdichten der faserigen Vorform des Schaufel- oder Propellerteils einer Strömungsmaschine und der faserigen Vorform mit dem aerodynamischen Profil, die auf dieser Vorform positioniert wurde, um die Schaufel oder den Propeller einer Strömungsmaschine zu erhalten.

10. Verfahren nach Anspruch 9, wobei eine Verdichterschaufel erhalten wird.

## Claims

1. A method for manufacturing a fibrous preform (1) for a blade or propeller part of a turbomachine, comprising at least one fixing base (3) extended by a mounting portion (5) of an aerodynamic profile, the method comprising at least:
- the winding of a fibrous texture (12), obtained by contour weaving, on a substrate (20) of changing section having at least a first region of extra thickness in the shape of the fixing base and a second region in the shape of the mounting portion of the aerodynamic profile.

2. The method according to claim 1, wherein the fibrous texture (12) is co-wound on the substrate (20) with a multiaxial web (22) having fibers (22a; 22b) oriented differently from the fibers of the fibrous texture.

3. The method according to claim 2, wherein the multiaxial web (22) comprises at least a first unidirectional fibrous layer (22a) oriented at +45° relative to a longitudinal axis of the substrate, superimposed on at least a second unidirectional fibrous layer (22b) oriented at -45° relative to the longitudinal axis (X20) of the substrate (20).

4. The method according to any one of claims 1 to 3, wherein the fixing base (3) of the fibrous preform (1) is axisymmetric.

5. The method according to any one of claims 1 to 4, wherein the texture (12) is obtained by contour weaving by using a take-up mandrel (14) at the exit of the loom separate from the substrate (20) and having at least a first yarn take-up area (15) having a first radius (R1) and a second yarn take-up area (19) with a second radius (R2), the first radius being greater than the second radius, the yarns taken on the first area being wound on the first region of the substrate and those taken on the second area being wound on the second region of the substrate.

6. The method according to any one of claims 1 to 5, wherein the weaving in the shape of the texture (12) and its winding on the substrate (20) are carried out continuously.

7. The method according to any one of claims 1 to 6, wherein the substrate (20) is obtained by three-dimensional weaving.

8. A method for manufacturing a composite material blade or propeller part for a turbomachine, comprising at least:
- the manufacture of a fibrous preform (1) for the blade or propeller part of a turbomachine by implementing a method according to any one of claims 1 to 7, and
- the formation of a matrix in a porosity of the fibrous preform thus obtained.

9. A method for manufacturing a composite material blade or propeller for a turbomachine, comprising at least:
- the formation of a fibrous preform (1) for the blade or propeller part of a turbomachine according to any one of claims 1 to 7,
- the positioning of a fibrous preform (7) of an aerodynamic profile on the mounting portion (5), and
- the co-densification of the fibrous preform of the turbomachine blade or propeller part and the fibrous preform of the aerodynamic profile positioned on this preform in order to obtain the turbomachine blade or propeller.

10. The method according to claim 9, wherein a fan blade is obtained.
